# EUROPEAN PATENT APPLICATION

(11) **EP 4 080 172 A1**
(43) Date of publication of application: **26.10.2022**
(21) Application number: 22165836.2
(22) Date of filing: 31.03.2022
(51) Int. Cl.: G01D 5/353, B32B 3/00, B32B 7/00, B32B 7/14

(54) **APPARATUS FOR ATTACHING OPTICAL FIBER TO A STRUCTURE**

(30) Priority: 20.04.2021 US 202117235123
(71) Applicant: Palo Alto Research Center Incorporated, Webster, NY 14580 (US)
(72) Inventor: CHAMOUN, Jacob N, Palo Alto, 94304 (US); CHEN, Qiushu, Palo Alto, 94304 (US); KIESEL, Peter, Palo Alto, 94304 (US)
(74) Representative: Gill Jennings & Every LLP

(57) **Abstract**

An apparatus includes one or more stamps configured to install an optical fiber on a surface of a structure. Each stamp includes a backing. A first adhesive is disposed on one or more first regions of the backing and is configured to provide a temporary bond between the optical fiber and the surface. A second adhesive is disposed on at least a second region of the backing and is configured to provide a substantially permanent bond between the optical fiber and the surface. A liner is removably adhered to the first adhesive.

## Description

### BACKGROUND

Fiber optic (FO) sensors can be used for detecting parameters such as strain, temperature, pressure, current, voltage, chemical composition, and vibration. FO sensors are attractive components because they are thin, lightweight, sensitive, robust to harsh environments, and immune to electromagnetic interference (EMI) and electrostatic discharge. FO sensors can be arranged to simultaneously measure multiple parameters distributed in space with high sensitivity in multiplexed configurations over long optical fiber cables. One example of how this can be achieved is through fiber Bragg grating (FBG) sensors. A FBG sensor is formed by a periodic modulation of the refractive index along a finite length (typically a few mm) of the core of an optical fiber. This pattern reflects a wavelength, called the Bragg wavelength, determined by the periodicity of the refractive index profile. The Bragg wavelength is sensitive to external stimulus (strain and/or temperature, etc.) that changes the periodicity of the grating and/or the index of refraction of the fiber. Thus, FBG sensors rely on the detection of small wavelength changes in response to stimuli of interest. In some implementations, FO sensors can be attached to structures and operated to detect parameters, e.g., strain, temperature, vibration, related to the health of the structures.

### SUMMARY

Embodiments described herein involve an apparatus, comprising one or more stamps configured to install an optical fiber on a surface of a structure. Each stamp comprises a backing. A first adhesive is disposed on one or more first regions of the backing and is configured to provide a temporary bond between the optical fiber and the surface. A second adhesive is disposed on at least a second region of the backing and is configured to provide a substantially permanent bond between the optical fiber and the surface. A liner is removably adhered to the first adhesive.

Embodiments involve an apparatus, comprising one or more stamps configured to install an optical fiber on a structure. Each stamp comprises a backing. A first adhesive is disposed on one or more regions of the backing and configured to provide a temporary bond between the optical fiber and the surface. A liner is removably adhered to the first adhesive. An opening is disposed in the backing. The opening is configured to be aligned with the optical fiber and to accept a second adhesive configured to provide a substantially permanent bond between the optical fiber and the structure.

Embodiments involve an apparatus comprising a sensing tape. The sensing tape comprises a backing. A first adhesive is disposed on one or more first regions of the backing. A second adhesive is disposed on at least a second region of the backing. A liner is removably adhered to the first adhesive. An optical fiber is arranged between the first adhesive and the liner. The first adhesive is configured to provide a temporary bond between the optical fiber and a structure. The second adhesive is configured to provide a substantially permanent bond between the optical fiber and the structure.

Embodiments described herein involve a method of attaching an optical fiber to a structure, bringing a first adhesive disposed on a backing into contact with the structure. The optical fiber is temporarily adhered to the structure using the first adhesive. A second adhesive disposed is brought into contact with the optical fiber and the structure. The optical fiber is substantially permanently adhered to the structure using the second adhesive.

### BRIEF DESCRIPTION OF THE DRAWINGS

Throughout the specification reference is made to the appended drawings wherein:
FIG. 1A is a cross sectional view of a stamp that can be used to attach an optical fiber to a structure in accordance with some embodiments;
FIG. 1B illustrates the stamp of FIG. 1A from the perspective of looking down on liner side of the stamp with the liner removed;
FIG. 1C is a view of the stamp of FIG. 1A from the perspective of looking down on the stamp so that the opposing second surface of the backing is visible;
FIG. 1D shows the stamp of FIG. 1A after the stamp has been used to attach an optical fiber comprising a FO sensor to a structure in accordance with some embodiments;
FIG. 1E shows an elongated tape comprising multiple stamps in accordance with some embodiments;
FIG. IF is a view of the bottom of the tape of FIG 1E showing the common backing in accordance with some embodiments;
FIG. 1G shows multiple stamps arranged in a stack in accordance with some embodiments;
FIG. 1H shows multiple stamp stacks arranged as an elongated tape in accordance with some embodiments;
FIG. 1I is a cross sectional view illustrating a stamp that includes openings in the backing configured to receive the second adhesive wherein the first adhesive is disposed substantially continuously over the backing in accordance with some embodiments;
FIG. 1J is a cross sectional view illustrating a stamp that includes openings in the backing configured to receive the second adhesive wherein the first adhesive is disposed at discrete regions of the backing in accordance with some embodiments;
FIG. 1K illustrates multiple stamps arranged as an elongated tape in accordance with some embodiments;
FIG. 2A shows a stamp that includes a reservoir of second adhesive in accordance with some embodiments;
FIG. 2B shows the stamp of FIG. 2A after the breakaway portion of the backing has been broken forming an opening that allows the second adhesive to flow to contact the optical fiber in accordance with some embodiments;
FIG. 3A depicts a sensing tape having multiple sensors at multiple sensing locations in accordance with some embodiments;
FIG. 3B is a close up cross sectional view of the tape of FIG. 3A at a sensing location;
FIG. 3C shows a sensing tape comprising multiple FO sensors disposed at multiple sensing locations along the tape in accordance with some embodiments;
FIG. 3D is a cross sectional view of the sensing tape of FIG 3C;
FIG. 3E shows a sensing tape wherein the first adhesive is disposed at discrete first regions of the first surface of the backing in accordance with some embodiments;
FIG. 3F is a view of a sensing tape comprising reservoirs of second adhesive from the perspective of looking down toward the second surface of the backing of the sensing tape in accordance with some embodiments;
FIG. 3G is a cross sectional view of a portion of the sensing tape of FIG. 3F;
FIG. 3H is a cross-sectional view of a portion of a sensing tape having a removable liner;
FIG. 4 is an illustration of a tape arranged on a roll in accordance with some embodiments;
FIG. 5A is a flow diagram of a method of adhering an optical fiber to a structure in accordance with some embodiments;
FIGS. 5B through 5G are a series of diagrams illustrating a processes involved in adhering an optical fiber to a structure in accordance with some embodiments; and
FIGS. 6A through 6F are photographs of example sensing tapes that were constructed in accordance with some embodiments.

The figures are not necessarily to scale. Like numbers used in the figures refer to like components. However, it will be understood that the use of a number to refer to a component in a given figure is not intended to limit the component in another figure labeled with the same number.

### DETAILED DESCRIPTION

Some embodiments disclosed herein involve apparatuses for attaching FO sensors to structures. Fiber optic sensors can be deployed on various types of structures, e.g., bridges, roadways, railways, and electrical devices such as transformers, to monitor the structural health of the structures. The disclosed embodiments can facilitate mounting FO sensors to the structures in such a way that strain from the structures is transmitted to the sensors. The approaches discussed herein provide for attachment of FO sensors that is flexible enough to attach the FO sensors to a variety of different substrates, e.g. concrete, metal, and wood. Repeatability of the attachment is desired so that at least some or most of the FO sensors have the same pre-strain once attached. The disclosed attachment approaches can be simple and rapid to perform to facilitate the deployment of multiple FO sensors on a structure. The use of an adhesive attachment approach obviates the need to drill holes in the structure or weld anything onto the structure.

Some embodiments disclosed herein are directed to an adhesive stamp that can be applied to an optical fiber to attach the optical fiber to a structure. According to some aspects, the adhesive stamp comprises two different adhesives: a first adhesive to create an instant, temporary bond that holds the optical fiber at a desired pre-strain; and a second adhesive to create a slow curing, permanent bond between the optical fiber and the structure. The stamp can include a fixed amount of the second adhesive, enhancing repeatability of the attachment method.

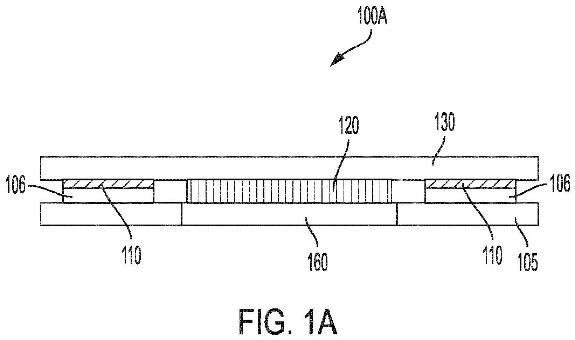

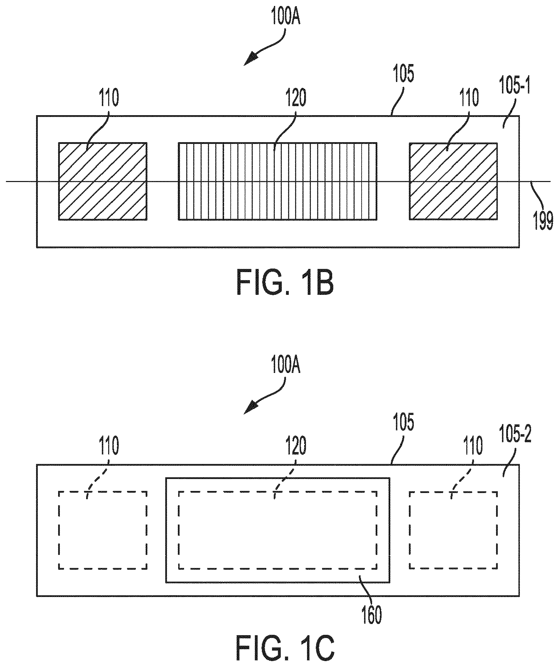

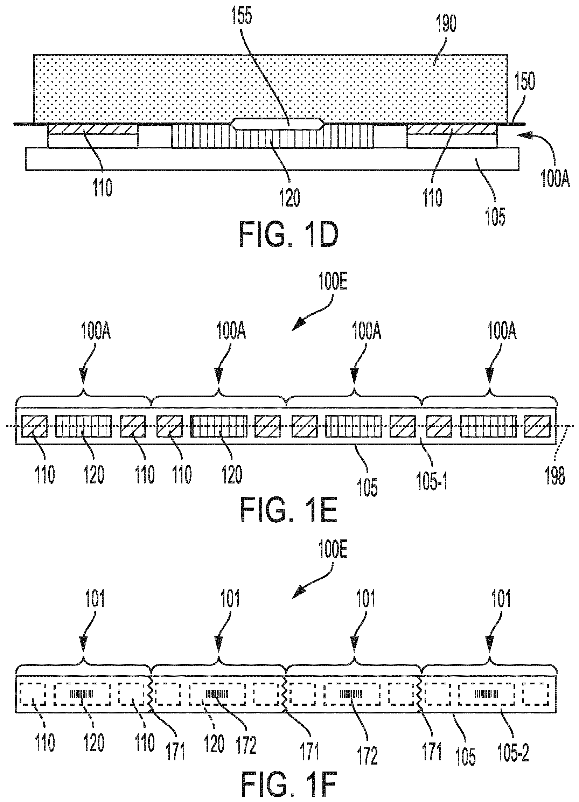

FIG. 1A is a cross sectional view of a stamp 100A that can be used to attach an optical fiber (not shown) comprising one or more FO sensors, e.g., fiber Bragg grating (FBG) sensors to a structure in accordance with some embodiments. FIG. 1B illustrates the stamp 100A from the perspective of looking down on liner side of the stamp 100A with the liner 130 removed so that the first surface 105-1 of the backing 105 is visible. FIG. 1B shows the first and second adhesives 110, 120 disposed on the first surface 105-1 of the backing 105. FIG. 1C is a view of the stamp 100A from the perspective of looking down on the stamp 100A so that the opposing second surface 105-2 of the backing 105 is visible.

The stamp 100A includes a backing 105 having a first surface 105-1 and an opposing second surface 105-2. There are two types of adhesives 110, 120 disposed on the backing 105. A predetermined amount of the first adhesive 110 is disposed on one or more first regions of the backing 105. In some configurations, the backing 105 may optionally include standoff portions 106 that support the first adhesive 110. Optionally, the standoff portions are not present. Optionally the second adhesive 120 may also be disposed on a standoff portion of the backing, however this is not illustrated in FIG. 1A. The first adhesive 110 is configured to provide a substantially instantaneous bond between the optical fiber and the structure (not shown in FIG. 1A). In some configurations, the first adhesive 110 may be a pressure sensitive adhesive, for example.

A predetermined amount of the second adhesive 120 is disposed on at least a second region of the backing 105. In some implementations, as shown in FIG. 1A, the first and second adhesives are disposed on the same surface of the backing 105. The second adhesive 120 is configured to provide a substantially permanent bond between the optical fiber and the structure. The second adhesive 120 can be a curable adhesive that can be cured by exposure to ultraviolet light, heat, air, a chemical accelerator, etc. The first adhesive 110 can be configured to form a bond more quickly than the second adhesive 120. The first adhesive 110 may quickly form a temporary bond that is not as strong as the bond formed by the second adhesive 120, for example. The second adhesive 120 may require a longer bond time but forms a stronger, more permanent bond than the first adhesive 110. The optical fiber may be pre-strained such that the temporary bond formed by the first adhesive 110 temporarily holds the optical fiber and/or a FO sensor on the optical fiber at a first predetermined strain. The permanent bond formed by the second adhesive may substantially permanently hold the optical fiber and/or FO sensor at a second predetermined strain. In some implementations, the first and second strains are equal and in some implementations, the first and second strains are different. For example, in one scenario, an FO sensor may be pre-strained to a first pre-strain value, temporarily adhered to the structure with the first pre-strain, and then permanently adhered to the structure at the same pre-strain. In another scenario, the FO sensor may be pre-strained to a first strain value, temporarily adhere to the structure with the first adhesive, strained to a second pre-strain value different from the first pre-strain value, and then permanently adhered to the structure with the second pre-strain.

As best seen in FIG 1B, the first adhesive may be disposed at first and second discrete locations that are spaced apart along a longitudinal axis 199 of the backing. The second adhesive 120 is disposed at a third discrete location that is between the first and second locations. Alternatively in some embodiments, the first adhesive 110 may be disposed substantially continuously over the backing 105 and a predetermined amount of the second adhesive 120 may be disposed at a discrete location on or over the first adhesive 110.

As best seen in FIGS. 1A and 1C, in some embodiments, the backing 105 includes a window 160 that is substantially transparent at the wavelengths of the curing radiation. The window 160 can be arranged relative to the second adhesive 120 to allow curing energy to pass through the window 160 to cure the second adhesive. The window 160 may be substantially transparent to ultraviolet (UV) radiation and/or substantially transparent to visible light in some implementations. In some embodiments, the second adhesive 120 is disposed over the window 160.

Returning now to FIG. 1A, the stamp 100A optionally includes a liner 130 arranged proximate to the first adhesive 110. In some configurations, the liner 130 is proximate to the first adhesive 110 and the second adhesive 120. The first and second adhesives 110, 120 can be positioned between the liner 130 and the backing 105. In the embodiment of FIG. 1A, removal of the liner 130 exposes the first adhesive 110 and the second adhesive 120. The liner 130 is configured to removably adhere to the first adhesive 110. In embodiments wherein both the first and second adhesives 110, 120 are proximate to the liner 130, the liner 130 may be configured to preferentially adhere relatively more strongly to the first adhesive 110 and relatively less strongly to the second adhesive 120.

The stamp 100A can be used to attach an optical fiber comprising one or more FO sensors to a structure. FIG. 1D shows the stamp 100A that has been used to attach an optical fiber 150 comprising a FO sensor 155 to a structure 190. The liner of the stamp 101 is removed exposing both the first adhesive 110 and the second adhesive 120. The stamp 101 is then positioned in relation to an FO sensor 155 at a desired location of the structure 190. The optical fiber 150 can be pre-tensioned to a first pre-strain value. The stamp 101 is pressed onto the optical fiber 150 and the structure 190 such that the first adhesive 110 creates a temporary bond between the optical fiber 150 and the structure 190. The first adhesive bond maintains the first pre-strain in the optical fiber 150 and keeps the FO sensor 155 attached to the structure 190 while the second adhesive 120 cures. In some embodiments, the optical fiber and/or FO sensor may be strained again to a second pre-strain value after it is adhered to the structure by the first adhesive and before the second adhesive 120 cures. For example, the second adhesive 120 may be cured using UV exposure, application of heat, exposure to air, or other processes. The curing of the second adhesive 120 creates a strong permanent bond between the FO sensor 155 and the structure 190 such that strain from the structure 190 is transferred to the FO sensor 155.

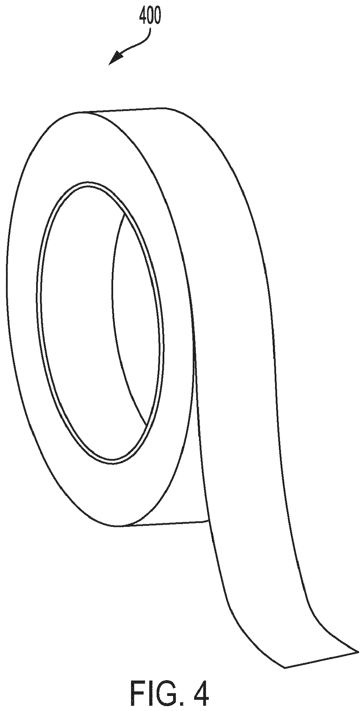

In some embodiments, multiple stamps 100A may be arranged as an elongated tape 100E as shown in FIGS. 1E and IF. FIG. 1E shows the tape 100E from the perspective of looking down on the tape from the liner side with the liner 130 removed. As shown, the longitudinal axes 199 of the stamps 100A (see FIG. 1B) are substantially aligned along the longitudinal axis 198 of the tape 100E. It may be convenient to arrange the elongated tape 100E as a roll 400 as depicted in FIG. 4. A roll 400 of stamps may be applied to a structure using a roll-to-roll process, for example.

Elongated tape 100E comprises multiple stamps 100A comprising regions of first adhesive 110 and regions of second adhesive 120. The stamps can be individual stamps concatenated by an additional backing, for example. Alternatively, as illustrated in FIG. IE, the stamps 100A may comprise sets of first and second adhesive that share a common backing 105 and/or a common liner 130. FIG. IF is a view of the bottom of the tape 100E showing the common backing 105. As best seen in FIG. IF, in some embodiments, the tape 100E may include perforations 171 disposed substantially perpendicular to the longitudinal axis 198 of the tape 100E between the stamps 100A to facilitate the process of singulating the stamps 100A. Perforations 171 in the backing and/or liner between adjacent stamps 100A can enhance operation of automated dispensing of the stamps 100A.

As depicted in FIG. IF, the tape 100E may include identifying marks 172, such as barcodes, alphanumeric characters, and/or other identifying marks that identify the stamps 100A from one another. The identifying marks 172 may be conveniently located on the second surface 105-2 of the backing 105, for example. The identifying marks 172 allow an operator or an automated stamp dispensing system to keep track of the number of stamps 100A that have been used or remain on the tape.

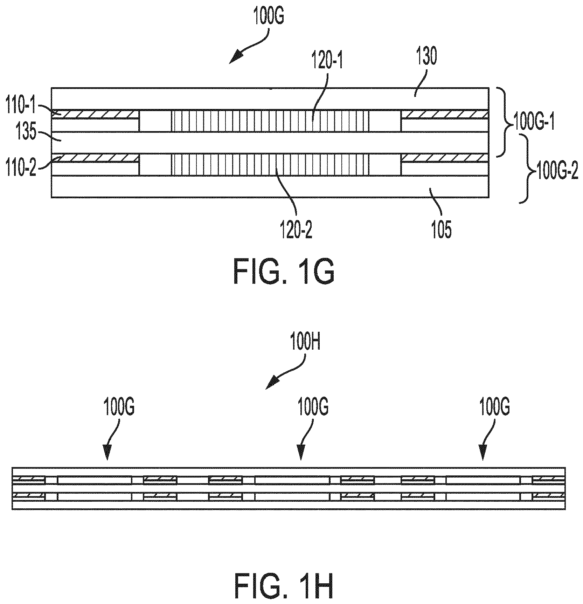

In some embodiments, multiple stamps 100G-1, 100G-2 may be arranged in a stack 100G as shown in FIG. 1G. Multiple stamp stacks 100G may be arranged as an elongated tape 100H as shown in FIG. 1H. In these embodiments, it may be useful for the backing 135 for the first layer of stamps 100G-1 in the stack to form the liner 135 for an adjacent layer of stamps 100G-2 as shown in the cross sectional view of a double layer stamp stack 100G of FIG. 1G. The double layer stamp stack 100G comprises a first stamp layer 100G-1that includes backing/liner 135, first adhesive 110-1 on the backing/liner 135, second adhesive 120-1 disposed on the backing/liner 135, and liner 130. The first and second adhesives 110, 120 are disposed between the backing/liner 135 and the liner 130. The backing/liner 135 forms the backing of the first stamp layer 100G-1 and the liner of the second stamp layer 100G-2. The second stamp layer 100G-2 includes a backing 105, a first adhesive 110-2 and second adhesive 120-2. The first and second adhesives 110-2, 120-2 are disposed between the backing 105 and the backing/liner 135.

FIG. 1H illustrates a cross sectional view of multiple stamp stacks 100G arranged as an elongated tape 100H. In some implementations, the elongated tape 100H of stamp stacks 100G can be arranged as a roll 400 shown in FIG. 4. When the stamp stacks 100G are arranged on a roll, they may be installed on a structure using a roll-to-roll process, for example. Note that although stamp stacks 100G comprising two layers are shown in FIGS. 1G and 1H, it will be appreciated that a stamp stack may include any number of layers as determined by the particular implementation.

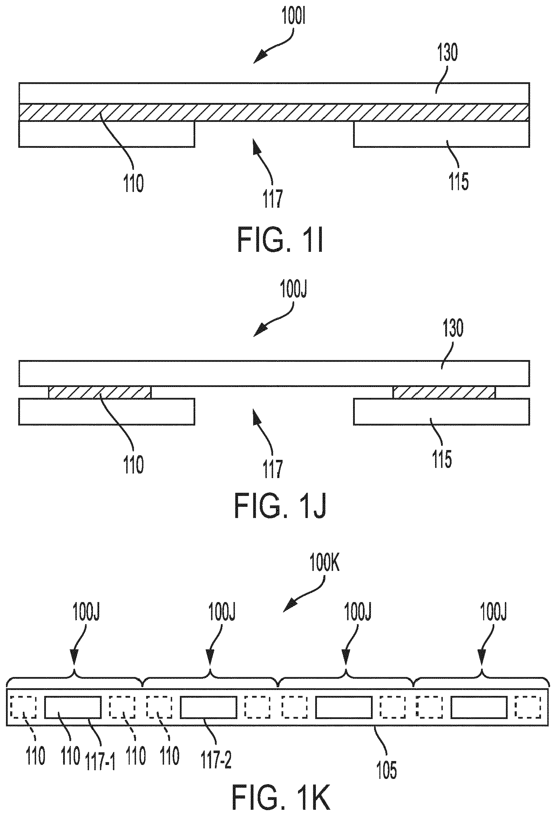

In accordance with some embodiments, a stamp may not include the second adhesive. In some embodiments, the first adhesive 110 may be disposed substantially continuously over the backing 115 as shown in the cross sectional view of stamp 1001 (FIG. 1I). In some embodiments, the first adhesive 110 may be disposed at discrete locations of the backing 115 as shown in the cross sectional view of stamp 100J (see FIG. 1J). The backing 115 includes one or more openings 117 that can be aligned with an optical fiber. The opening 117 is configured to receive the second adhesive (not shown in FIGS. 1I and 1J) and to allow the second adhesive to contact the optical fiber and the structure. The stamp 1001, 100J includes a liner 130 removably adhered to the first adhesive 110.

As previously discussed, multiple stamps 1001, 100J may be arranged as a tape. A tape 100K of stamps 100J is illustrated in FIG. 1K in a view looking toward the backing 105. In this embodiment, the stamps 100J share a common backing 105 and may share a common liner. Perforations may be disposed between the stamps 100J to facilitate singulating the stamps 100J. In some embodiments different types of second adhesives may be deployed through the openings 117, e.g., depending on the sensors being attached to the structure. For example, a first type of second adhesive may be deployed into the first opening 117-1 and a second type of second adhesive may be deployed into the second opening 117-2. In circumstances (e.g. temperature sensing) wherein the sensor needs to "float" without a strain-transferring attachment to the structure, no second adhesive may be deployed.

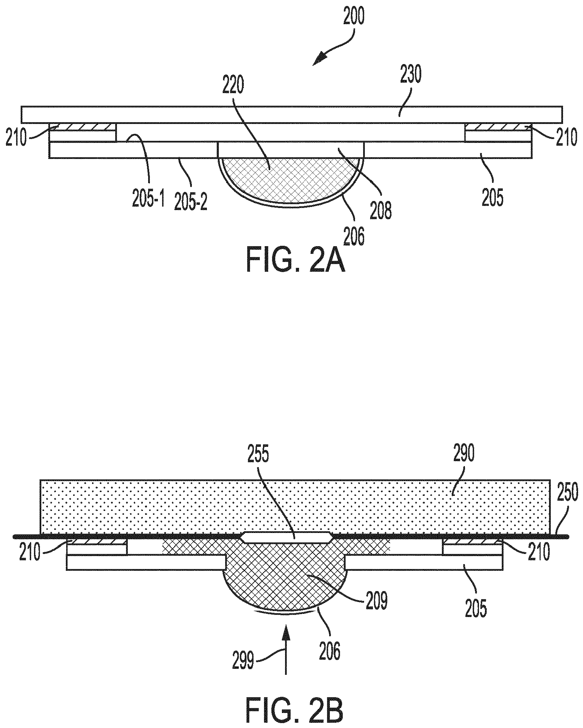

In some embodiments, a stamp 200 may include a reservoir of second adhesive 220 that extends below the backing 205 when the stamp is oriented as shown in the cross sectional view of FIG. 2A. Stamp 200 includes a backing 205 and lining 230 with first and second adhesives 210, 220 disposed on the backing. As shown in FIG. 2A, the second adhesive 220 is contained by a membrane 206 forming a reservoir of the second adhesive 220. In the embodiment shown, the second adhesive 220 is disposed proximate to a second surface 205-2 of the backing 205 and the first adhesive 210 is disposed proximate to the opposing first surface 205-1 of the backing 205. In some implementations, the backing 205 includes a breakaway portion 209 such that the backing and the membrane are capable of functioning as a "blister pack." Either before or after the stamp 200 is pressed against an optical fiber 250 and structure 290, the breakaway portion 208 is punctured e.g. using upward force along the direction indicated by arrow 299 or using a tool or peeling off the breakaway portion, causing the breakaway portion 208 of the backing 205 to break creating an opening 209 and the second adhesive 220 is released. FIG. 2B shows the stamp 200 after the breakaway portion 208 is broken and the opening formed 209. As depicted in FIG. 2B, the opening 209 allows the second adhesive 220 to flow onto and above the first surface 205-1 of the backing 205 and to make contact with the optical fiber 250, FO sensor 255 and structure 290. The second adhesive 220 can be cured to permanently bond the optical fiber 250 and FO sensor 255 to the structure 290.

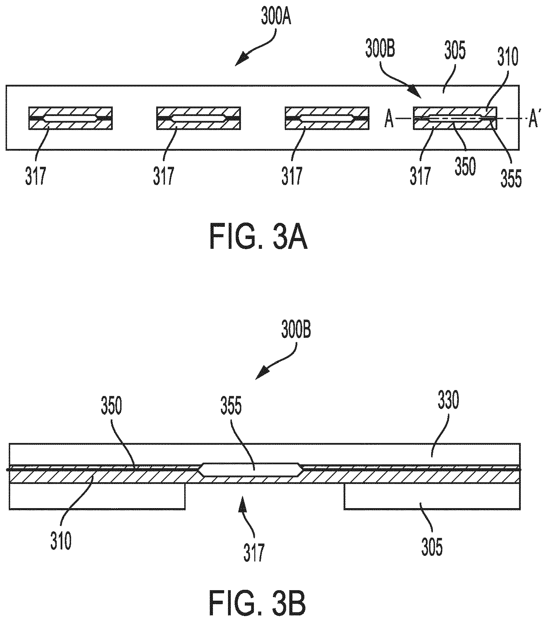

Some embodiments are directed to an apparatus in which an optical fiber that may include multiple FO sensors is integrated into a single continuous sensing tape. The tape includes adhesive to facilitate attaching the optical fiber to a structure. FIG. 3A depicts a sensing tape 300A having multiple sensors 300B at multiple sensing locations from the perspective of looking down on the tape toward the backing 305. FIG. 3B is a close up cross sectional view of the tape at a sensing location.

According to some implementations, a sensing tape 300A comprises a backing 305 with the first adhesive 310 applied over the backing 305. For example, the first adhesive 310 may substantially cover of the first surface 305-1 of the backing 305 as shown in FIG. 3A. Alternatively, the first adhesive may be disposed at discrete locations on the first surface of the backing.

An optical fiber 350 comprising FO sensors 355 is adhered to the backing 305. In some implementations, an FO sensor 355 may be pre-strained to a first strain value and held at that strain value by the first adhesive 310. The backing 305 includes openings 317 aligned with the FO sensors 355 through which the second adhesive (not shown in FIGS. 3A and 3B) can be applied after the attaching the sensing tape to a structure. After the sensing tape 300A is attached to the structure and before the second adhesive 320 is applied and/or cured, an additional pre-strain may be applied to the optical fiber 350 and FO sensors 355 to strain the FO sensors to a second pre-strain value which may be different from the first pre-strain value.

In the embodiments disclosed herein it may be useful to employ different bonding methods, for different FO sensors to provide sensitivity to different target parameters. For example, if strain is the target parameter being sensed, the FO sensor may be bonded to the structure so that the strain from the structure is transferred to the FO sensor. Alternatively, if temperature is the target parameter being sensed, it may be useful to bond the FO sensor in such a way that the strain from the structure is not substantially transferred to the FO sensor so as to avoid the confounding effect of transferred strain from the structure. In some cases, a silicone adhesive (good for mechanical stability) may be used to adhere the sensor to a bridge, but due to its high compliance would not transfer strain effectively.

In some particular implementations, it can be useful to temporarily install the sensing tape on a structure using the first adhesive without applying and/or curing the second adhesive. This allows the tape to be tested and later removed. It is also possible for the second adhesive to be applied over one or multiple regions of optical fiber where there are no FO sensors present.

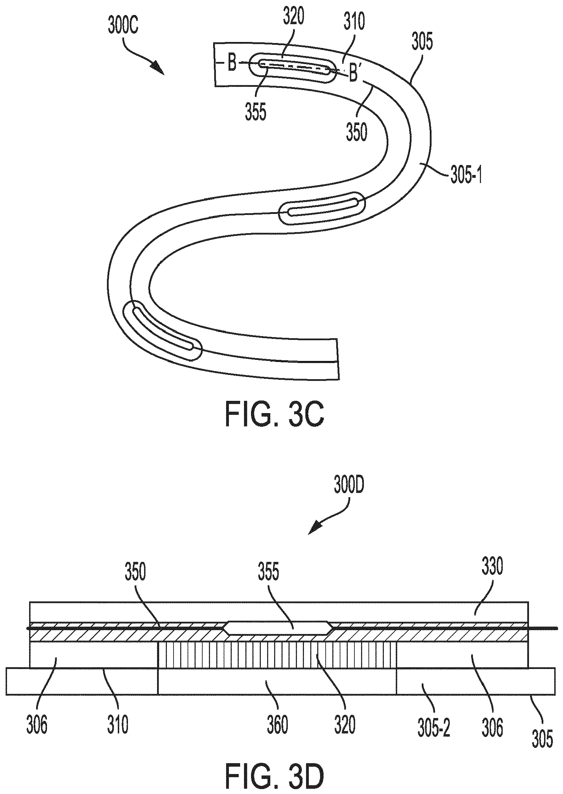

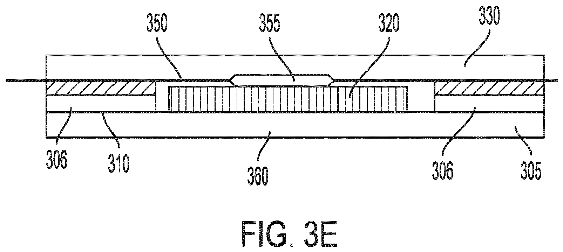

In some embodiments, an FO sensing tape can include both the first and second adhesives. FIG. 3C shows a sensing tape 300C comprising multiple FO sensors 300D disposed at multiple sensing locations along the tape. First and second adhesives 310, 320 are disposed on the tape backing 305. FIG 3C is a view of the sensing tape 300C from the perspective of looking down on the liner side of the tape with the liner removed. FIG. 3D is a cross sectional view at a sensing location that includes an FO sensor 300D. Sensing tape 300C comprises a backing 305 with a first adhesive 310 disposed over one or more regions of the backing 305. In the embodiment of FIG. 3C, the first adhesive substantially covers the first surface 305-1 of the backing 305. Alternatively, the first adhesive 310 may be disposed at discrete first regions of the first surface 305-1 of the backing 305 as illustrated in FIG. 3E. A second adhesive 320 is disposed in discrete second regions of the first surface 305-1 of the backing 305. Note that it is possible for first and second regions to be partially or completely overlapping. The second adhesive 320 may be substantially aligned with the FO sensor as shown in FIGS. 3C, 3D, and 3E.

The optical fiber 350 comprising FO sensors 355 is adhered to the backing 305 by the first adhesive 310. The first adhesive 310 is configured to provide a temporary bond between the optical fiber 350 and a structure and the second adhesive 320 configured to provide a substantially permanent bond between the optical fiber 350 and the structure. The first adhesive 310 may maintain a predetermined strain in the optical fiber.

In some embodiments, the backing 305 may include windows 360 aligned with the FO sensors 355 through which curing energy, such as UV radiation, and/or visible light can be pass through the backing 305 to the second adhesive 320. After the sensing tape 300C is attached to a structure by a temporary bond formed by the first adhesive 310, the second adhesive 320 can be cured to form a substantially permanent bond between the optical fiber 350, FO sensors 355, and the structure. After the sensing tape 300C is attached to the structure and before the second adhesive 320 is cured, an additional pre-strain may be applied to the optical fiber 350 and FO sensors 355 as previously discussed.

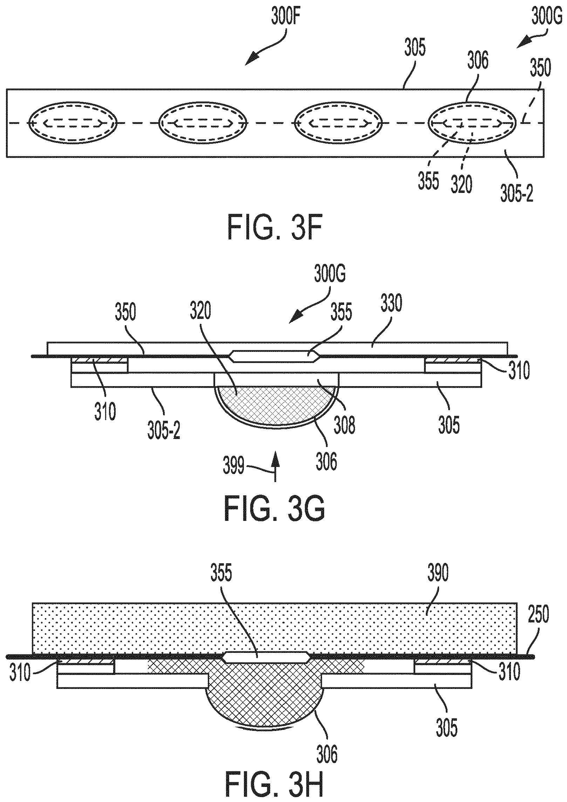

FIGS. 3F through 3H illustrate another embodiment of a sensing tape 300F. In the embodiment of FIG. 3F, the second adhesive 320 is disposed within reservoirs created by membranes as previously described in connection with FIGS. 2A and 2B. FIG. 3F is a view of the sensing tape 300F from the perspective of looking down toward the second surface 305-2 of the backing 305. FIG. 3G is a cross sectional view of a portion 300G of the sensing tape 300F. The sensing tape 300F includes a backing 305 that has a first surface 305-1 and an opposing second surface 305-2. A first adhesive 310 is disposed on the first surface 305-1 of the backing 305. The optical fiber 350 and FO sensors 355 are adhered to the first adhesive 310.

The sensing tape 300F includes a second adhesive 320 disposed on the second surface 305-2 of the backing 305 in a reservoir that is bounded by a membrane 306. As best seen in FIG. 3G, the backing 305 includes a breakaway portion 308 that is configured to form an opening in the backing 305. For example, the opening in the breakaway portion may be created when a force is applied through the membrane 306 along the direction arrow 399, for example.

The tape 300F may include a removable liner 330. After the liner 330 is removed, the tape 300F can be applied to a structure 390 as illustrated in FIG. 3H. After the tape 300F is applied to a structure, the first adhesive 310 forms a temporary bond between the optical fiber 350, FO sensor 355, and the structure. In some embodiments, the first adhesive 310 holds the optical fiber 350 at a first pre- strain value. While the tape 300F is adhered to the structure by the first adhesive 310, the breakaway portion 308 of the backing 305 is punctured allowing the second adhesive 320 to contact the optical fiber 350, FO sensor 355 and the structure. The second adhesive 320 cures to form a permanent bond between the optical fiber 350, FO sensor 355, and structure. After the sensing tape 300F is attached to the structure and before the second adhesive 320 is applied and/or cured, the optical fiber 350 and/or FO sensor 355 may be strained to a second pre-strain value.

The tapes described in connection with FIGS. 3A through 3H can be arranged as a roll 400 as shown in FIG. 4. When the sensing tape is arranged as a roll, the sensing tape can be installed on a structure using a roll-to-roll process, for example.

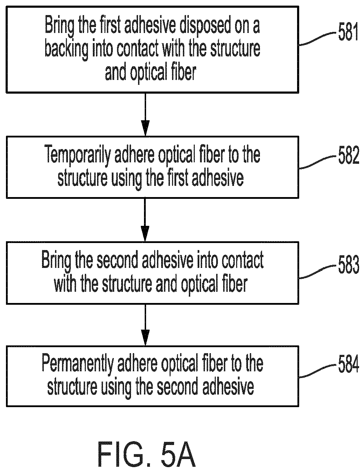

FIGS. 5A through 5G illustrate methods of adhering an optical fiber to a structure. Referring to the flow diagram of FIG. 5A, a method involves bringing 581 a first adhesive in contact with an optical fiber and a structure. The first adhesive is used to temporarily adhere 582 the optical fiber to the structure. A second adhesive is brought 583 into contact with the optical fiber and structure. The second adhesive substantially permanently adheres 584 the optical fiber with the structure.

When a sensing tape is used to attach the optical fiber to the structure, the optical fiber is already attached to the first adhesive before the optical fiber is aligned with the structure. When a stamp is used to attach the optical fiber, the optical fiber may be aligned and/or positioned on the structure before the first adhesive contacts the optical fiber.

Substantially permanently adhering the optical fiber to the structure can involve curing the second adhesive after bringing the second adhesive into contact with the optical fiber and the structure. In some embodiments, the backing includes a window and curing the second adhesive involves directing UV radiation through the window in the backing.

According to some embodiments bringing the second adhesive into contact with the optical fiber and the structure involves breaking a breakaway portion of the backing to create and opening in the backing. The opening in the backing allows the second adhesive to flow through the opening to the make contact with the optical fiber and the structure.

In some embodiments, the optical fiber may be pre-strained before it is temporarily adhere to the structure using a first adhesive. According to some embodiments, the optical fiber may alternatively or additionally be pre-strained after the optical fiber is temporarily adhered to the structure.

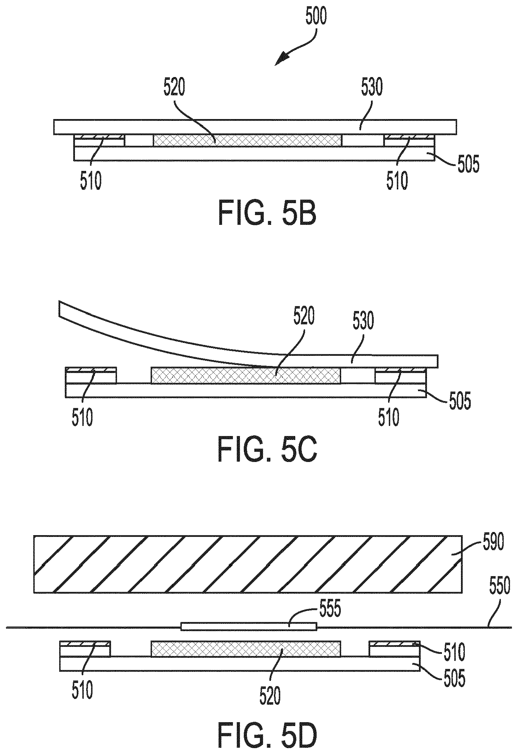

FIGS 5B through 5G are a series of diagrams illustrating a process of adhering an optical fiber to a structure. In this particular embodiment, a stamp 500 includes first and second adhesives 510, 520 sandwiched between a backing 505 and a liner 530. Encapsulating the adhesives 510, 520 within the stamp 500 provides a means to fix the amount of the second adhesive 520 that is applied which enhances repeatability of the process when compared to manual application of adhesive.

The first adhesive 510 is configured to temporarily bond the optical fiber 550 and FO sensor 555 to the structure 590 to maintain a predetermined strain value in the optical fiber 550 and/or FO sensor 555. The second adhesive 520 is different from the first adhesive 510 and can be a curable adhesive that is in an uncured state. After curing, the second adhesive 520 is configured to substantially permanently bond the optical fiber 550 and FO sensor 555 to the structure 590 at the predetermined strain value. The bond formed by the first adhesive 510 forms more quickly and is relatively shorter term in comparison to the bond formed by the second adhesive 520 which is slower to form and is relatively longer term bond.

Referring to FIG. 5B, the stamp 500 includes a removable liner 530 that adheres at least to the first adhesive 510. The material of the removable liner 530 may be configured to preferentially adhere to the first adhesive 510 relative to the second adhesive 520. The liner 530 may not adhere to the second adhesive 520 or may adhere weakly to the second adhesive520. Accordingly, the bond strength between the liner 530 and the first adhesive 510 is greater than the bond strength between the liner 530 and the second adhesive 520.

As illustrated in FIG. 5C, the removable liner 530 is peeled away from the stamp 500 in preparation for applying the stamp to the structure 590. Removing the liner 530 exposes the first adhesive 510 and the second adhesive 520 in this embodiment.

Referring now to FIG. 5D, an optical fiber 550 that includes a FO sensor 555 is pre-tensioned to a first strain value. The pre-tensioned optical fiber 550 is positioned at the desired location relative to the structure 590 as depicted in FIG. 5D.

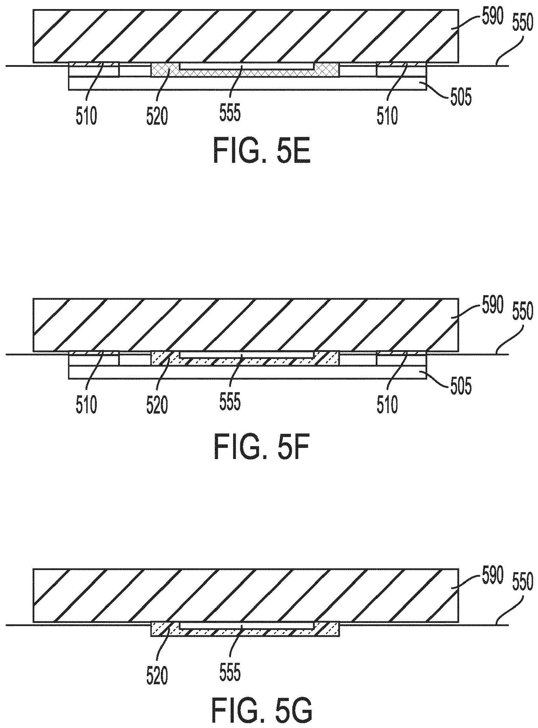

FIG. 5E shows the the stamp 500 with the liner 530 removed after the stamp is aligned with the pre-tensioned optical fiber 550 and is pressed against the structure 590 such that the optical fiber 550 and FO sensor 555 are sandwiched between the stamp 500 and the structure 590. As the stamp 500 is pressed onto the structure 590, the first adhesive 510 forms a temporary bond between the optical fiber 550 and the structure 590. The bond formed by the first adhesive 510 keeps the optical fiber 550 and FO sensor 555 attached to the structure 590 at a desired pre-strain value while the second adhesive 520 cures.

The second adhesive 520 may be cured, e.g., in response to exposure to UV radiation, application of heat, exposure to air, etc. Curing the second adhesive 520 creates a strong, permanent bond between the optical fiber 550, FO sensor 555, and the structure 590 that transfers strain from the structure 590 to the FO sensor 555. FIG. 5F shows the stamp after the second adhesive 520 is cured.

The backing 505 and/or first adhesive 510 can be removed after the second adhesive 520 is cured. In some embodiments, the backing 505 and first adhesive 510 are configured to be removed by peeling them away from the structure 590, the optical fiber 550 and FO sensor 555. In some embodiments, the first adhesive 510 and/or the backing 505 are configured to degrade and substantially disappear. For example, the backing and/or first adhesive may degrade in response to the passage of time, UV radiation, application of heat, exposure to air, humidity and/or water. FIG. 5G illustrates a scenario in which both the first adhesive 510 and the backing 505 have degraded and disappeared, leaving the optical fiber 550 and FO sensor 555 attached to the structure 590 by the cured second adhesive 520.

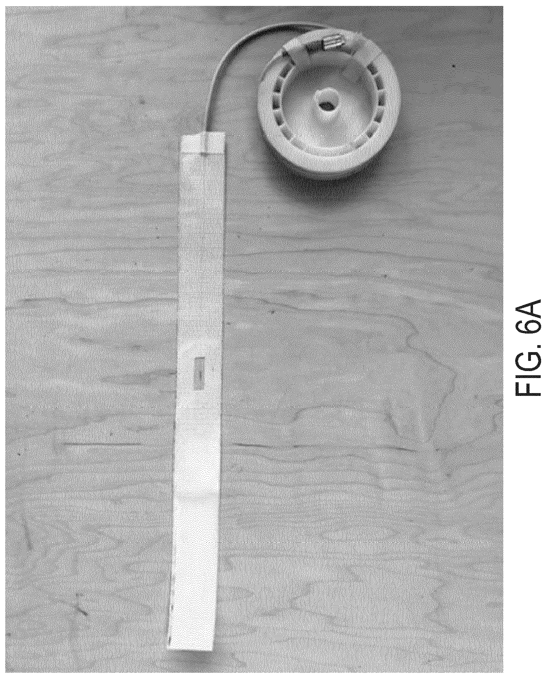

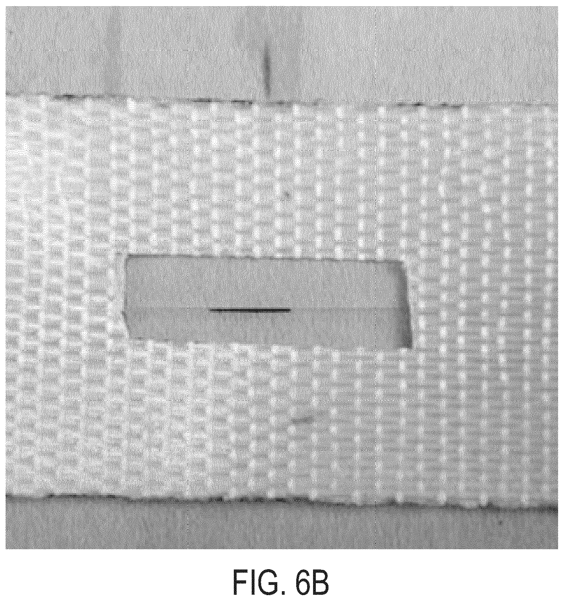

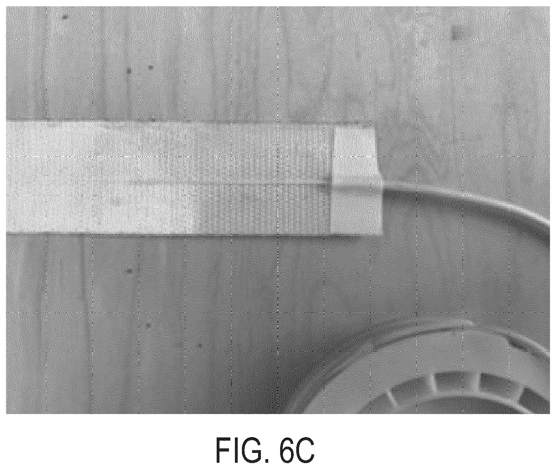

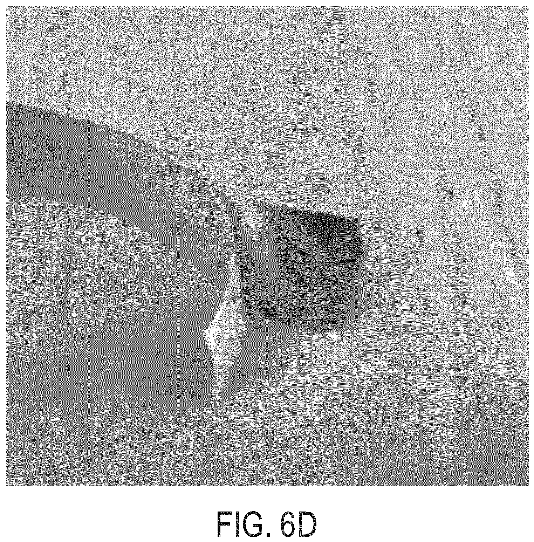

FIGS. 6A through 6F are photographs of example sensing tapes that were constructed in accordance with some embodiments. The photographs of FIG. 6A and 6B show a sensing tape for attaching an optical fiber to a structure. The optical fiber includes a FBG sensor strained to the backing of the sensing tape. A window in the sensing tape allows epoxy to be applied to bond the FBG sensor to the structure so as to enhance strain transfer between the structure and the FBG sensor. FIG. 6A shows an optical fiber patch cable enclosed within a sheath and used to operate and/or test the FO sensor. FIG. 6B is a close up view of the FBG sensor of the illustrated in FIG. 6A. FIG. 6C is a close up view of the transition from the optical fiber to the patch cable. FIG. 6D shows a film, e.g., a non-sticky film disposed on the sensing tape that can be used to enhanced transport, shipping, and handling of the sensing tape.

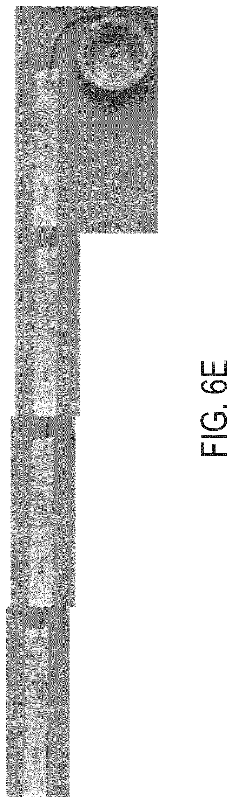

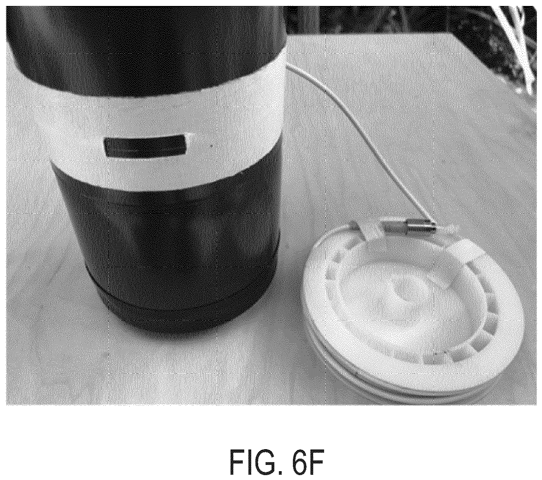

Some embodiments can involve a single sensing tape as depicted in FIG. 6A or multiple sensing tapes as shown in FIG. 6E. Multiple sensing tapes may be arranged in a roll. When multiple sensing tapes are present, they may be connected via bare optical fibers (shown in FIG. 6E) or connected by sheathed fiber optic cables. FIG. 6F is a photograph of a sensing tape after it was attached to a structure which is a small tank. The sensing tape provides a simple, reliable, and robust method to attach FO sensors to a structure. The tape protects the relatively fragile optical fiber during the installation process. After the tape is installed on the structure, the FO sensors can be permanently bonded to the structure by the second adhesive providing for strain transfer between the structure and the FO sensors.

Although the subject matter has been described in language specific to structural features and/or methodological acts, it is to be understood that the subject matter defined in the appended claims is not necessarily limited to the specific features or acts described above. Rather, the specific features and acts described above are disclosed as representative forms of implementing the claims.

## Claims

1. An apparatus, comprising:
one or more stamps configured to install an optical fiber on a surface of a structure, each stamp comprising:
a backing;
a first adhesive disposed on one or more first regions of the backing and configured to provide a temporary bond between the optical fiber and the surface;
a second adhesive disposed on at least a second region of the backing and configured to provide a substantially permanent bond between the optical fiber and the surface; and
a liner removably adhered to the first adhesive.

2. The apparatus of claim 1, wherein the first and second adhesives are configured such that the first adhesive has a shorter bond time compared to a bond time of the second adhesive, or such that a strength of the temporary bond is less than a strength of the permanent bond, or wherein the first and second adhesives are disposed between the liner and the backing, or wherein second adhesive is arranged such that removal of the liner exposes the second adhesive, or wherein the second adhesive comprises a curable adhesive.

3. The apparatus of claim 1, wherein:
the first adhesive is disposed in first and second locations spaced apart along a longitudinal axis of the backing; and
the second adhesive is disposed at a third location between the first and second locations, preferably wherein the backing comprises at least one window, the window substantially transparent to one or both of visible light and curing radiation, preferably wherein the second adhesive is disposed on the window.

4. The apparatus of claim 1, comprising multiple stamps arranged as an elongated tape.

5. The apparatus of claim 4, wherein the tape is arranged as a roll, or wherein the stamps share at least one of a common backing and a common liner.

6. The apparatus of claim 4, further comprising perforations between adjacent stamps of the multiple stamps in one or both of the backing and the liner, or wherein each stamp further comprises one or more identifying marks configured to differentiate the stamp from other stamps of the multiple stamps, preferably wherein the identifying marks comprise one or more of alphanumeric characters and a barcode.

7. The apparatus of claim 1, further comprising a reservoir bounded by a membrane configured to contain the second adhesive in the reservoir, preferably wherein;
the first adhesive is disposed on a first surface of the backing; and
the second adhesive is disposed within the reservoir on an opposing second surface of the backing.

8. An apparatus, comprising:
one or more stamps configured to install an optical fiber on a structure, each stamp comprising:
a backing;
a first adhesive disposed on one or more regions of the backing and configured to provide a temporary bond between the optical fiber and the surface;
a liner removably adhered to the first adhesive; and
an opening in the backing, the opening configured to be aligned with the optical fiber and to accept a second adhesive configured to provide a substantially permanent bond between the optical fiber and the structure.

9. The apparatus of claim 8, comprising multiple stamps arranged as an elongated tape.

10. An apparatus comprising:
a sensing tape comprising:
a backing;
a first adhesive disposed on one or more first regions of the backing;
a second adhesive disposed on at least a second region of the backing;
a liner removably adhered to the first adhesive; and
an optical fiber arranged between the first adhesive and the liner, the first adhesive configured to provide a temporary bond between the optical fiber and a structure and the second adhesive configured to provide a substantially permanent bond between the optical fiber and the structure.

11. A method of attaching an optical fiber to a structure, comprising:
bringing a first adhesive disposed on a backing into contact with the structure;
temporarily adhering the optical fiber to the structure using the first adhesive;
bringing a second adhesive disposed into contact with the optical fiber and the structure; and
substantially permanently adhering the optical fiber to the structure using the second adhesive.

12. The method of claim 11, comprising aligning the optical fiber with respect to the structure before or after the first adhesive contacts with the optical fiber.

13. The method of claim 11, wherein substantially permanently adhering the optical fiber to the structure comprises curing the second adhesive after bringing the second adhesive into contact with the optical fiber and the structure, preferably wherein curing the second adhesive comprises:
directing ultraviolet (UV) radiation through a window in the backing: and
curing the second adhesive with the UV radiation.

14. The method of claim 11, wherein bringing a second adhesive disposed on the backing into contact with the optical fiber and the structure comprises:
breaking a breakaway portion of the backing to create and opening in the backing; and
allowing the second adhesive to flow through the opening in the backing.

15. The method of claim 11, further comprising pre-straining the optical fiber before or after temporarily adhering the optical fiber to the structure using a first adhesive.
